# EUROPEAN PATENT APPLICATION

(11) **EP 4 102 383 A1**
(43) Date of publication of application: **14.12.2022**
(21) Application number: 20917417.6
(22) Date of filing: 06.02.2020
(51) Int. Cl.: G06F 21/32

(54) **AUTHENTICATION METHOD, INFORMATION PROCESSING DEVICE, AND AUTHENTICATION PROGRAM**

(71) Applicant: FUJITSU LIMITED, Kawasaki-shi, Kanagawa 211-8588 (JP)
(72) Inventor: HAMA, Soichi, Kawasaki-shi, Kanagawa 211-8588 (JP); AOKI, Takahiro, Kawasaki-shi, Kanagawa 211-8588 (JP)
(74) Representative: Hoffmann Eitle
(86) International application number: PCT/JP2020/004603
(87) International publication number: WO 2021/157023

(57) **Abstract**

A computer accepts biometric information to be authenticated detected by a biometric sensor. The computer specifies a face image of any one of persons included in a captured image on the basis of an orientation of a line of sight or an orientation of a face of one or more persons appearing in the captured image captured by an imaging device at the time of detecting the biometric information to be authenticated. The computer selects registered biometric information associated with registered face image information similar to the specified face image from among pieces of registered biometric information respectively associated with a plurality of pieces of registered face image information. The computer authenticates the biometric information to be authenticated on the basis of a comparison result of comparing the biometric information to be authenticated with the selected registered biometric information.

## Description

### TECHNICAL FIELD

The present invention discussed herein is related to an authentication method, an information processing device, and an authentication program.

### BACKGROUND ART

Biometric authentication is a technique for verifying a person in question using biometric features such as fingerprints, palm prints, veins, and faces. In the biometric authentication, the biometric features acquired from a person to be authenticated are compared (collated) with the biometric features registered in advance in a registration template, and authentication for the person to be authenticated is performed on the basis of a comparison result indicating whether the biometric features match or note. The biometric features registered in the registration template are sometimes called registered data.

The biometric authentication is used in various fields such as bank automated teller machines (ATMs) and physical access control, and in recent years, the biometric authentication has begun to be used for cashless payments in stores such as supermarkets and convenience stores.

As authentication methods for biometric authentication, 1:1 authentication and 1:N authentication are known. 1:1 authentication is an authentication method for comparing the biometric feature of a person to be authenticated with registered data specified by an ID such as a personal identification number (PIN) code, a card or the like. 1:N authentication is an authentication method for searching for registered data that matches the biometric feature of the person to be authenticated from among a plurality of registered data. In stores or the like, 1:N authentication is often adopted from a viewpoint of convenience.

However, since the biometric feature fluctuates depending on an acquisition status or the like, if the number of registered data to be searched increases, a possibility of occurrence of erroneous authentication increases. For this reason, an operation of narrowing down the registered data by a simple PIN code or the like and making a set of registered data to be searched sufficiently small, and then performing 1:N authentication is conducted. To what extent the set of registered data is made small to obtain a practical level depends on the type of biometric feature. However, even if the PIN code is simple, having the person to be authenticated enter the PIN code impairs convenience.

Therefore, an authentication method of narrowing down a set of registered data by one biometric feature and authenticating a person to be authenticated using another biometric feature, using a plurality of types of biometric features, has been proposed. Since convenience is impaired if a plurality of types of biometric features is individually acquired, an authentication method of acquiring a palm vein at the same time as a fingerprint, an authentication method of capturing a face image when acquiring the palm vein, and the like have been proposed (for example, see Non-Patent Document 1).

A line-of-sight tracking technique using a face image of a person is also known (see, for example, Non-Patent Documents 2 to 4).

### SUMMARY OF INVENTION

### TECHNICAL PROBLEM

For example, in the case of narrowing down a set of registered data using the face image and authenticating the person to be authenticated using the palm vein, using the biometric authentication technique described in Non-Patent Document 1, a load of authentication processing may increase.

Note that such a problem occurs not only in the case of authenticating the person to be authenticated using the palm vein but also in the case of authenticating the person to be authenticated using another biometric feature.

According to one aspect, an object of the present invention is to reduce a load of authentication processing in biometric authentication using a face image and biometric information other than the face image.

### SOLUTION TO PROBLEM

In one option, a computer accepts biometric information to be authenticated detected by a biometric sensor. The computer specifies a face image of any one of persons included in a captured image on the basis of an orientation of a line of sight or an orientation of a face of one or more persons appearing in the captured image captured by an imaging device at the time of detecting the biometric information to be authenticated.

The computer selects registered biometric information associated with registered face image information similar to the specified face image from among pieces of registered biometric information respectively associated with a plurality of pieces of registered face image information. The computer authenticates the biometric information to be authenticated on the basis of a comparison result of comparing the biometric information to be authenticated with the selected registered biometric information.

### ADVANTAGEOUS EFFECTS OF INVENTION

According to one aspect, in biometric authentication using a face image and biometric information other than the face image, a load of authentication processing can be reduced.

### BRIEF DESCRIPTION OF DRAWINGS

FIG. 1 is a functional configuration diagram of an information processing device.
FIG. 2 is a flowchart of biometric authentication processing.
FIG. 3 is a functional configuration diagram illustrating a specific example of the information processing device.
FIG. 4 is a diagram illustrating a captured image in which faces of a plurality of persons appear.
FIG. 5 is a diagram illustrating a gaze period.
FIG. 6 is a diagram illustrating a relationship between clock time t0 and a period.
FIG. 7 is a flowchart illustrating a specific example of the biometric authentication processing.
FIG. 8 is a flowchart of a biometric authentication processing in which face specifying processing is omitted.
FIG. 9 is a flowchart of a biometric authentication processing including position determination processing.
FIG. 10 is a flowchart of the position determination processing.
FIG. 11 is a hardware configuration diagram of the information processing device.

### DESCRIPTION OF EMBODIMENTS

Hereinafter, an embodiment will be described in detail with reference to the drawings.

For example, a biometric authentication system that narrows down a set of registered data using a face image and authenticates a person to be authenticated using a palm vein will be examined using the biometric authentication technique described in Non-Patent Document 1. In this biometric authentication system, for example, a list of N candidates (N is an integer of 1 or larger) for a person to be authenticated is generated by performing face authentication. Then, authentication processing for the person to be authenticated is performed by performing 1:N authentication using registered data of a palm vein of each candidate included in the generated list.

At this time, a plurality of faces may be simultaneously captured depending on an installation status of a camera for capturing the face image or a use status of a user who is the person to be authenticated. For example, in a case where the face images of three persons are acquired, a list for the three persons is generated, so target persons for palm vein authentication are 3N persons, and a processing time of the palm vein authentication is three times as much as a case where the face image of one person is acquired. Furthermore, in a case where N that has been initially set is an upper limit value of 1:N authentication using the palm vein, a risk of accepting another person who is mistakenly authenticated as a person in question increases.

If the candidates are tried to be narrowed down to N/3 with the face images in order to shorten the processing time of the palm vein authentication and reduce the risk of accepting another person, the processing time of the face authentication will increase. Moreover, there is a possibility that the person in question is not included in the list depending on authentication accuracy of the face authentication.

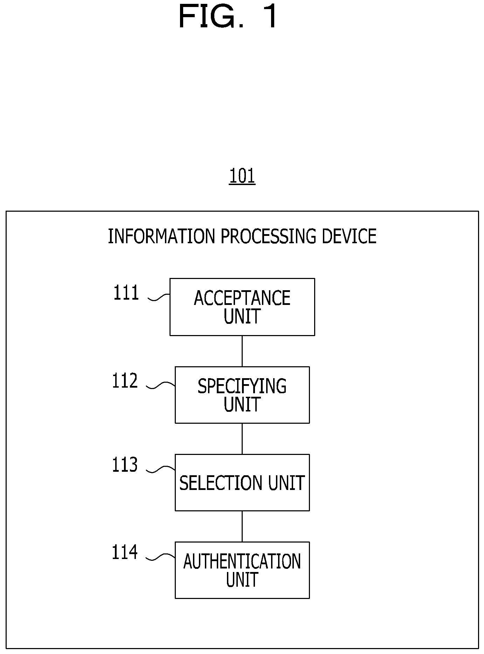

FIG. 1 illustrates a functional configuration example of an information processing device (computer) of the embodiment. An information processing device 101 of FIG. 1 includes an acceptance unit 111, a specifying unit 112, a selection unit 113, and an authentication unit 114.

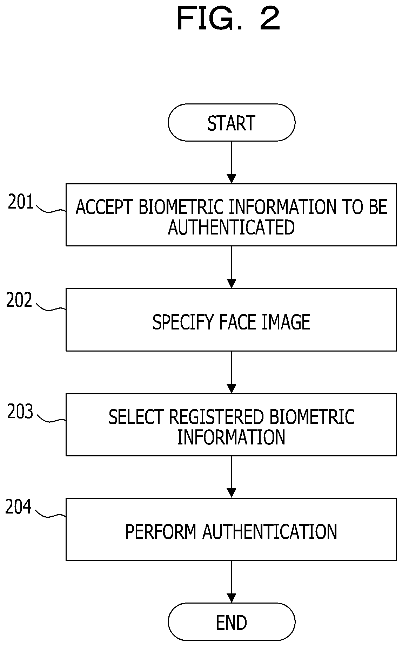

FIG. 2 is a flowchart illustrating an example of biometric authentication processing performed by the information processing device 101 of FIG. 1. First, the acceptance unit 111 accepts biometric information to be authenticated detected by a biometric sensor (step 201). Next, the specifying unit 112 specifies a face image of any one of persons included in a captured image on the basis of an orientation of a line of sight or an orientation of a face of one or more persons appearing in the captured image captured by an imaging device at the time of detecting the biometric information to be authenticated (step 202).

Next, the selection unit 113 selects registered biometric information associated with registered face image information similar to the specified face image from among pieces of registered biometric information respectively associated with a plurality of pieces of registered face image information (step 203). Then, the authentication unit 114 authenticates the biometric information to be authenticated on the basis of a comparison result of comparing the biometric information to be authenticated with the selected registered biometric information (step 204).

According to the information processing device 101 of FIG. 1, in the biometric authentication using a face image and biometric information other than the face image, a load of authentication processing can be reduced.

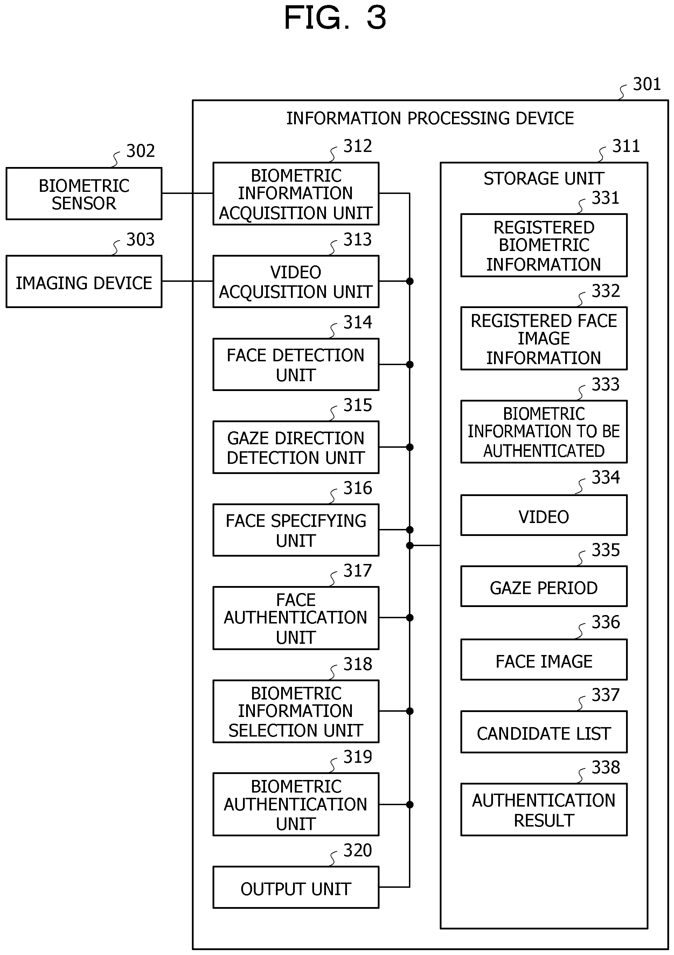

FIG. 3 illustrates a specific example of the information processing device 101 of FIG. 1. An information processing device 301 of FIG. 3 includes a storage unit 311, a biometric information acquisition unit 312, a video acquisition unit 313, a face detection unit 314, a gaze direction detection unit 315, a face specifying unit 316, a face authentication unit 317, and a biometric information selection unit 318, a biometric authentication unit 319, and an output unit 320. The information processing device 301 may be, for example, a server included in a financial processing system of a financial institution, a physical access control system, or a payment system of a retail store.

The biometric information acquisition unit 312, the face specifying unit 316, the biometric information selection unit 318, and the biometric authentication unit 319 correspond to the acceptance unit 111, the specifying unit 112, the selection unit 113, and the authentication unit 114 in FIG. 1, respectively.

A biometric sensor 302 is, for example, a vein sensor, a fingerprint sensor, an image sensor (camera), or the like, and captures a living body such as a palm or a finger to acquire a biometric image such as a vein image, a fingerprint image, or a palm print image. For example, in the case where the biometric sensor 302 is a vein sensor, the biometric sensor 302 irradiates the palm with near infrared rays or the like and captures blood vessels or the like inside the hand.

The biometric sensor 302 outputs information of the acquired biometric image to the information processing device 101 as biometric information to be authenticated 333. The biometric information to be authenticated may be a biometric image or a pattern generated from the biometric image. The pattern generated from the biometric image is a vein pattern, a fingerprint pattern, a palm print pattern, or the like.

The imaging device 303 is a camera including an imaging element such as a charge-coupled device (CCD) or a complementary metal-oxide-semiconductor (CMOS), for example, and captures a video 334 of a person to be authenticated. A plurality of time-series images are included in the video captured by the imaging device 303. The image at each clock time is an example of a captured image. The image at each clock time is sometimes called frame. The imaging device 303 outputs the captured video 334 to the information processing device 101.

The biometric information acquisition unit 312 accepts the biometric information to be authenticated 333 by acquiring the biometric information to be authenticated 333 from the biometric sensor 302, and stores the acquired biometric information to be authenticated 333 in the storage unit 311. The video acquisition unit 313 accepts the video 334 by acquiring the video 334 from the imaging device 303, and stores the acquired video 334 in the storage unit 311.

The storage unit 311 stores registered biometric information 331 and registered face image information 332 of each of a plurality of persons as registrants. The registered biometric information 331 of each person includes a user ID and the biometric information of the person. The biometric information may be a biometric image or a pattern generated from the biometric image.

The registered face image information 332 of each person includes the user ID and face image information of the person. The face image information may be a face image or a feature amount indicating a feature of the face image. As the feature amount of the face image, for example, histograms of oriented gradients (HOG) feature amount, a scaled invariance feature transform (SIFT) feature amount, a speeded-up robust features (SURF) feature amount, or the like can be used. The feature amount of the face image may be a binary robust independent elementary features (BRIEF) feature amount or a saliency.

The biometric information included in the registered biometric information 331 of each person and the face image information included in the registered face image information 332 of each person are associated with each other via the user ID.

Faces of a plurality of persons including the person to be authenticated may appear simultaneously in the video 334 depending on the installation status of the imaging device 303 or the use status of the person to be authenticated. When the person to be authenticated inputs a biometric image to the biometric sensor 302, it is difficult to hold the hand over the biometric sensor gropingly without looking at the biometric sensor 302, so the person to be authenticated usually visually confirms the position of the biometric sensor 302 and then hold the hand over the biometric sensor 302.

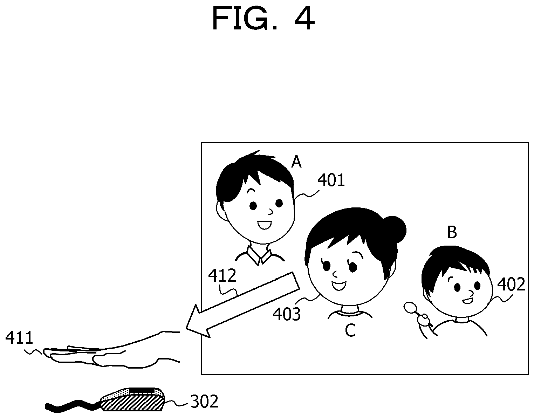

FIG. 4 illustrates an example of a captured image in which faces of a plurality of persons appear. A face image 401 to a face image 403 are included in the captured image of FIG. 4. Among the face images, the face image 403 corresponds to the face image of the person to be authenticated, and the face image 401 and the face image 402 correspond to the face images of persons other than the person to be authenticated.

The person to be authenticated is gazing at the biometric sensor 302 in order to hold a hand 411 over the biometric sensor 302, and a gaze direction 412 of the person to be authenticated is a direction from a position of the eyes of the person to be authenticated toward a position of the biometric sensor 302. Meanwhile, the persons other than the person to be authenticated do not gaze at the biometric sensor 302.

Therefore, by detecting the gaze direction of each person appearing in the captured image, it is possible to determine whether each person is trying to input the biometric image to the biometric sensor 302 or not, and specify the face image of the person to be authenticated. Then, a set of registered biometric information 331 to be compared with the biometric information to be authenticated 333 can be narrowed down from the pieces of registered biometric information 331 of a large number of registrants on the basis of the specified face image. As an example, the total number of registrants is about 1 million, and the number of registrants after narrowing down is about 10,000.

The face detection unit 314 detects a face image in which a person's face appears from each image included in the video 334, and assigns a face ID to the detected face image. In the example of FIG. 4, "A", "B", and "C" are assigned as the face IDs of the face image 401, the face image 402, and the face image 403, respectively.

The face detection unit 314 assigns the same face ID to the face images of the same person detected from different images by tracking an object among the plurality of images included in the video 334. Thereby, the face images of the same person are associated with each other among the plurality of images.

The gaze direction detection unit 315 detects the gaze direction of the person appearing in the face image for each face image. The gaze direction detection unit 315 detects the gaze direction of the person on the basis of, for example, the orientation of a line of sight of the person or the orientation of the face of the person.

The orientation of the face can be estimated from a positional relationship among the eyes, nose, and mouth appearing in the face image, and the orientation of the line of sight can be estimated from the orientation of the face and the position of the black eye in the eye. The gaze direction detected on the basis of the direction of the line of sight has higher detection accuracy than the gaze direction detected on the basis of only the orientation of the face.

The orientation of the face and the orientation of the line of sight may be estimated by image processing, or may be estimated by machine learning such as deep learning. As a method of estimating the orientation of the line of sight by image processing, for example, the line-of-sight tracking technique described in Non-Patent Document 2 can be used. As a method of estimating the orientation of the line of sight by deep learning, for example, the line-of-sight tracking technique described in Non-Patent Document 3 or Non-Patent Document 4 can be used.

By detecting the gaze direction on the basis of the orientation of the face or the orientation of the line of sight of the person appearing in the face image, it is possible to detect the gaze direction only from the video 334 without providing a line-of-sight sensor.

The gaze direction detection unit 315 calculates a period in which the gaze direction faces the position of the biometric sensor 302 on the basis of the respective gaze directions of a plurality of face images having the same face ID among the face images in the images respectively captured at a plurality of clock times. Then, the gaze direction detection unit 315 stores the calculated period as a gaze period 335 corresponding to the face ID in the storage unit 311.

The face specifying unit 316 compares acceptance clock time of the biometric information to be authenticated 333 with the gaze period 335 corresponding to each face ID, and specifies the face ID indicating the face image of the person to be authenticated on the basis of a comparison result. For example, in a case where the gaze period 335 including a specific period before the biometric information to be authenticated 333 is accepted is recorded, the face specifying unit 316 specifies the face ID corresponding to the gaze period 335 as the face ID of the person to be authenticated. Then, the face specifying unit 316 extracts a face image 336 indicated by the specified face ID from any one of the images captured within the specific period, and stores the extracted face image 336 in the storage unit 311.

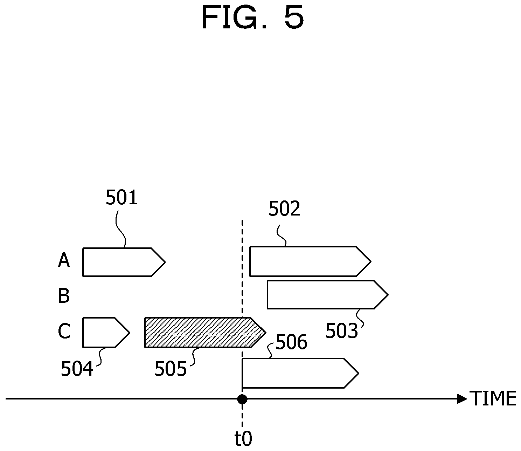

FIG. 5 illustrates an example of the gaze period 335 corresponding to the face ID illustrated in FIG. 4. The horizontal axis represents time. In this example, at clock time t0, the person to be authenticated holds the hand 411 over the biometric sensor 302, and the input of the biometric information to be authenticated 333 by the biometric sensor 302 is started. Then, in a period 506, the input of the biometric information to be authenticated 333 is continued. Therefore, the acceptance clock time of the biometric information to be authenticated 333 is the clock time t0.

The gaze period 335 corresponding to the face ID "A" is a period 501 and a period 502, the gaze period 335 corresponding to the face ID "B" is a period 503, and the gaze period 335 corresponding to the face ID "C" is a period 504 and a period 505.

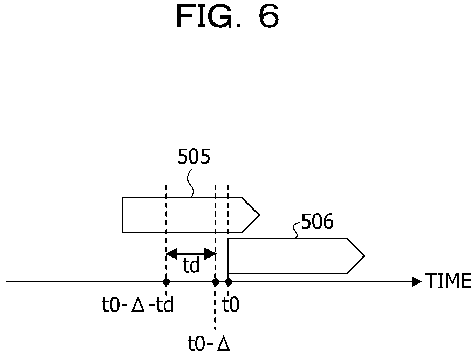

FIG. 6 illustrates an example of the relationship between the clock time t0 and the period 506 illustrated in FIG. 5. A time td represents a minimum gaze time in which the person to be authenticated gazes at the biometric sensor 302. In the case where the person to be authenticated holds the hand 411 over the biometric sensor 302, the person to be authenticated gazes at the biometric sensor 302 for at least the time td from when confirming the position of the biometric sensor 302 to when holding the hand 411 over the biometric sensor 302.

The period from clock time t0-Δ-td to clock time t0-Δ corresponds to the specific period before the biometric information to be authenticated 333 is accepted, and the time td represents the length of the specific period. The time Δ is sufficiently shorter than the time td, and the clock time t0-Δ is the clock time immediately before the clock time t0.

Usually, the person to be authenticated keeps gazing at the biometric sensor 302 even during the period from the clock time t0-Δ to the clock time t0, but in the case of the person to be authenticated who is accustomed to the biometric sensor 302, the person to be authenticated may remove the line of sight from the biometric sensor 302 immediately before the clock time t0. Therefore, even if the period from the clock time t0-Δ to the clock time t0 is not included in the gaze period 335, when the specific period before the period is included in the gaze period 335, it is determined that the gaze period 335 corresponds to the person to be authenticated.

In this way, by detecting the gaze direction of the person from the image captured in the specific period before the acceptance clock time of the biometric information to be authenticated 333, it is possible to estimate whether the input biometric information to be authenticated 333 is the biometric information of the person or not. Moreover, by detecting the gaze direction of a person from each of a plurality of images captured in the specific period and calculating the gaze period 335, it is possible to improve the estimation accuracy of the person corresponding to the biometric information to be authenticated 333.

The face authentication unit 317 performs face authentication for the face image 336 by comparing the face image 336 with each registered face image information 332. The face authentication unit 317 calculates similarity between the face image 336 and each registered face image information 332, for example.

In a case where the face image information included in the registered face image information 332 is a face image, the face authentication unit 317 calculates a feature amount F1 of the face image 336 and a feature amount F2 of the face image included in the registered face image information 332, and calculates the similarity using the feature amount F1 and the feature amount F2. In a case where the face image information included in the registered face image information 332 is the feature amount F2, the face authentication unit 317 calculates the feature amount F1 of the face image 336, and calculates the similarity using the feature amount F1 and the feature amount F2.

The biometric information selection unit 318 selects a predetermined number of pieces of registered face image information 332 in descending order of the similarity calculated by the face authentication unit 317. Then, the biometric information selection unit 318 generates a candidate list 337 including the user ID of the selected registered face image information 332 and stores the generated candidate list 337 in the storage unit 311. The biometric information selection unit 318 selects the registered biometric information 331 corresponding to each user ID in the candidate list 337 by generating the candidate list 337. Thereby, the set of registered biometric information 331 to be compared with the biometric information to be authenticated 333 can be narrowed down from the pieces of registered biometric information 331 of a plurality of persons.

The biometric authentication unit 319 performs biometric authentication for the biometric information to be authenticated 333 by comparing the biometric information to be authenticated 333 with the registered biometric information 331 corresponding to each user ID in the candidate list 337. Then, the biometric authentication unit 319 generates an authentication result 338 and stores the authentication result 338 in the storage unit 311.

The biometric authentication unit 319 calculates, for example, the similarity between the biometric information to be authenticated 333 and each registered biometric information 331, and stores the user ID of the registered biometric information 331 having the highest similarity as the authentication result 338 in the storage unit 311. The output unit 320 outputs the authentication result 338.

According to the information processing device 301 of FIG. 3, even in the case where the faces of a plurality of persons appear in the video 334, it is possible to specify the face image that is likely to be the person to be authenticated. By generating the candidate list 337 on the basis of the specified face image, the set of registered biometric information 331 is appropriately narrowed down. Furthermore, the load of the processing of detecting the gaze direction, the processing of specifying the face image 336 according to the gaze direction, and the processing of narrowing down the registered biometric information 331 by the face image 336 is smaller than the load of the biometric authentication processing using the biometric information to be authenticated 333. Therefore, the load of the biometric authentication on the biometric information to be authenticated 333 is reduced, and high-speed and highly accurate biometric authentication processing is implemented.

Furthermore, since the face image of the person other than the person to be authenticated is excluded from a face authentication processing target, the privacy of the captured person can be appropriately protected.

Note that a plurality of users may gaze at the biometric sensor 302 at the same time, depending on the installation status of the biometric sensor 302. In this case, the information processing device 301 may try to specify the face image by applying another determination criterion different from the gaze direction of each user. The another determination criterion is a determination criterion in which it is difficult to conclude that the user who is gazing at the biometric sensor 302 is the person to be authenticated but a probability that the user is presumed to be the person to be authenticated is high.

As the another determination criterion, for example, estimated distance from the biometric sensor 302 to each user, a position of each user's face in the captured image, and the like can be used. A user who is close to the biometric sensor 302 has a higher probability of being presumed to be the person to be authenticated than a user who is far from the biometric sensor 302. Furthermore, a face closer to a center of the captured image has a higher probability of being presumed to be the person to be authenticated than a face far from the center of the captured image.

Furthermore, the information processing device 301 may perform previously determined predetermined processing without specifying the face image. Examples of the predetermined processing include processing of instructing the person to be authenticated to re-input the biometric information, processing of generating the candidate list 337 using each of the face images of a plurality of users who are gazing at the biometric sensor 302, and the like.

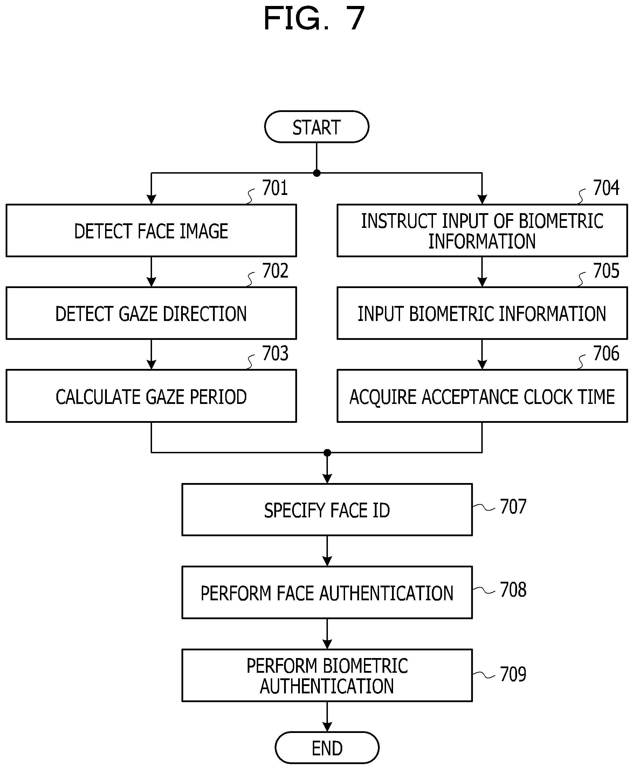

FIG. 7 is a flowchart illustrating a specific example of the biometric authentication processing performed by the information processing device 301 of FIG. 3. The imaging device 303 starts capture of the video 334 at the same time as the start of the biometric authentication processing, and the video acquisition unit 313 acquires the video 334 from the imaging device 303.

First, the face detection unit 314 detects the face image from each image included in the video 334, and assigns the face ID to the detected face image (step 701). Next, the gaze direction detection unit 315 detects the gaze direction of the person appearing in each face image (step 702), and calculates the gaze period 335 corresponding to each face ID (step 703).

In parallel with the processing in step 701 to step 703, the biometric information acquisition unit 312 instructs the person to be authenticated to input the biometric information (step 704). Next, the biometric sensor 302 inputs the biometric information to be authenticated 333, and the biometric information acquisition unit 312 acquires the biometric information to be authenticated 333 from the biometric sensor 302 (step 705). Then, the biometric information acquisition unit 312 acquires input start clock time of the biometric information to be authenticated 333 as the acceptance clock time (step 706).

Next, the face specifying unit 316 compares the acceptance clock time of the biometric information to be authenticated 333 with the gaze period 335 corresponding to each face ID, and specifies the face ID indicating the face image of the person to be authenticated on the basis of a comparison result (step 707). Then, the face specifying unit 316 extracts the face image 336 indicated by the specified face ID from the video 334.

Next, the face authentication unit 317 performs the face authentication for the face image 336, and the biometric information selection unit 318 generates the candidate list 337 on the basis of the result of the face authentication (step 708). Then, the biometric authentication unit 319 performs the biometric authentication for the biometric information to be authenticated 333 using the candidate list 337, and the output unit 320 outputs the authentication result 338 (step 709).

By the way, in the case where only the face of the person to be authenticated appears in the video 334, it is possible to omit the face specifying processing including calculation of the gaze period 335 and specification of the face ID to reduce the processing load.

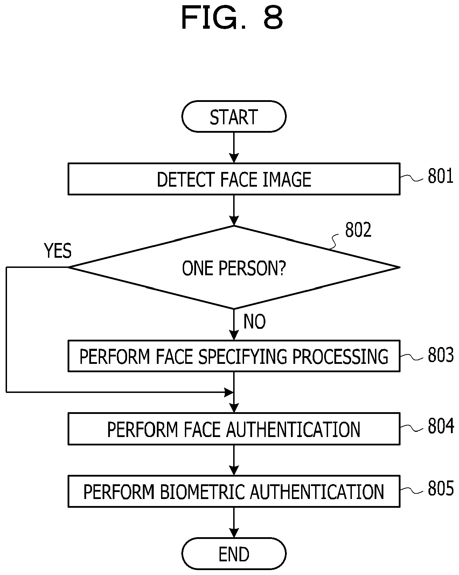

FIG. 8 is a flowchart illustrating an example of the biometric authentication processing in which the face specifying processing is omitted in the case where only the face of the person to be authenticated appears. First, the face detection unit 314 detects the face image from each image included in the video 334, and assigns the face ID to the detected face image (step 801). Then, the face detection unit 314 checks whether the detected face image is only the face image of one person or not (step 802).

In a case where only the face image of one person is detected (step 802, YES), the information processing device 301 performs processing in step 804 and step 805. Processing in step 804 and step 805 is similar to the processing in step 708 and step 709 of FIG. 7.

On the other hand, in a case where the face images of a plurality of persons are detected (step 802, NO), the information processing device 301 performs the face specifying processing (step 803). The face specifying processing is similar to the processing in step 702 to step 707 of FIG. 7. Then, the information processing device 301 performs the processing in step 804 and step 805.

In step 702 of FIG. 7, the position of the biometric sensor 302 used to detect the gaze direction may be a position preset according to installation information of the biometric sensor 302 or may be a position determined by position determination processing. In the position determination processing, the position of the biometric sensor 302 is determined on the basis of the gaze direction of the person appearing in the image captured before the specific period.

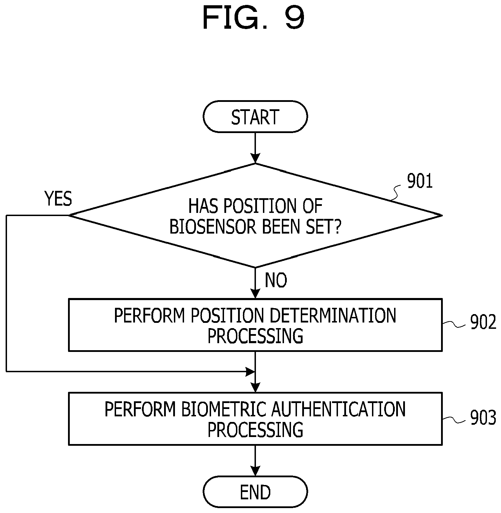

FIG. 9 is a flowchart illustrating an example of the biometric authentication processing including the position determination processing. First, the gaze direction detection unit 315 checks whether the position of the biometric sensor 302 has been set or not (step 901). In a case where the position of the biometric sensor 302 has been set (step 901, YES), the information processing device 301 performs the biometric authentication processing (step 903). The biometric authentication processing in step 903 is similar to the biometric authentication processing of FIG. 7 or FIG. 8.

On the other hand, in a case where the position of the biometric sensor 302 has not been set (step 901, NO), the information processing device 301 performs the position determination processing (step 902). Then, the information processing device 301 performs the biometric authentication processing (step 903).

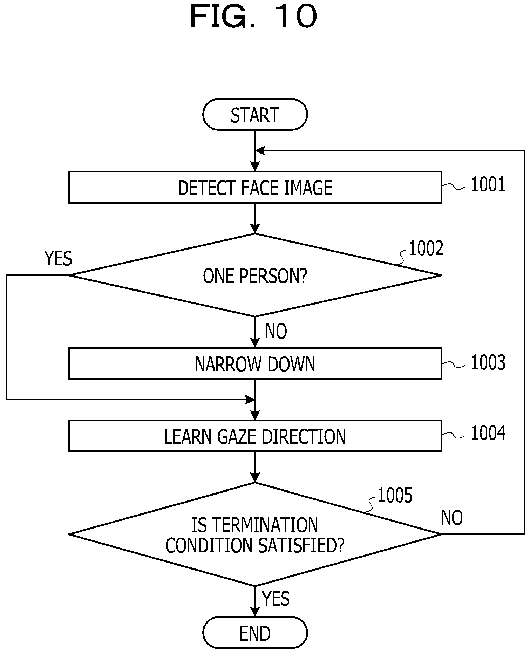

FIG. 10 is a flowchart illustrating an example of the position determination processing in step 902 of FIG. 9. In the position determination processing, as in the biometric authentication processing of FIG. 7, the video acquisition unit 313 acquires the video 334 from the imaging device 303, and the biometric information acquisition unit 312 acquires the biometric information to be authenticated 333 from the biometric sensor 302.

Processing in step 1001 and step 1002 is similar to the processing in step 801 and step 802 of FIG. 8. In a case where only the face image of one person is detected (step 1002, YES), the gaze direction detection unit 315 detects and learns the gaze direction of the person (step 1004).

On the other hand, in a case where the face images of a plurality of persons are detected (step 1002, NO), the gaze direction detection unit 315 narrows down the face images of persons to be processed from the face images of the plurality of persons (step 1003) and performs processing in step 1004.

In step 1003, the gaze direction detection unit 315 may display, for example, the detected face images side by side on a screen of a display device (not illustrated), and causes an operator to select the face image of the person to be processed via a user interface. Furthermore, the gaze direction detection unit 315 may perform the face authentication and the biometric authentication of the persons corresponding to all the detected face images similarly to the processing in step 708 and step 709 of FIG. 7, and extract the face image of the person with an authentication result showing successful. The person with the authentication result showing successful corresponds to the person who has input the biometric information to be authenticated 333 after gazing at the biometric sensor 302.

By narrowing down the face images of the persons to be processed, the gaze direction of the person who is not gazing at the biometric sensor 302 can be excluded as noise, and only the gaze direction of the person who is gazing at the biometric sensor 302 can be selectively learned.

In step 1004, the gaze direction detection unit 315 may learn the gaze direction by machine learning, or may learn the gaze direction by calculating statistical values of a plurality of gaze directions. As the statistical value in the gaze direction, an average value, a median value, or the like can be used.

Next, the gaze direction detection unit 315 checks whether a termination condition is satisfied or not (step 1005). In a case where the termination condition is not satisfied (step 1005, NO), the information processing device 301 repeats the processing in step 1001 and the subsequent steps, and in a case where the termination condition is satisfied (step 1005, YES), the information processing device 301 terminates the processing. By repeating the processing in step 1001 to step 1004, it is possible to increase the number of samples of the gaze direction to be learned.

For example, in the case where the learning method in step 1004 is machine learning, a condition that the estimation accuracy of the machine learning is higher than a certain value can be used as the termination condition. Furthermore, in the case where the learning method is calculation of statistical values, a condition that variation of samples is smaller than a specified value can be used as the termination condition. As the variation of samples, dispersion or standard deviation in the gaze direction is used, for example.

Note that, in the case where the face images of a plurality of persons are detected in step 1002, the gaze direction detection unit 315 may detect and learn the gaze directions of all the persons without narrowing down the face images of the persons to be processed.

According to the biometric authentication processing of FIG. 9, even in a case where the position of the biometric sensor 302 is unknown, it is possible to determine the position of the biometric sensor 302 by the position determination processing, and detect the gaze direction of the person who is gazing at the biometric sensor 302.

In step 903 of FIG. 9, the information processing device 301 may continue position determining processing similar to the processing in step 902. Thereby, the gaze direction of the person with the authentication result showing successful, which is detected in the biometric authentication processing, can be learned, so that the accuracy of the position of the biometric sensor 302 is improved.

The configurations of the information processing device 101 of FIG. 1 and the information processing device 301 of FIG. 3 are merely examples, and some configuration elements may be omitted or modified according to the use or conditions of the image processing device. For example, in the information processing device 301 of FIG. 3, the registered biometric information 331 and the registered face image information 332 may be stored in a database outside the information processing device 301. In this case, the information processing device 301 acquires the registered biometric information 331 and the registered face image information 332 from the external database and stores them in the storage unit 311.

The flowcharts of FIG. 2 and FIGs. 7 to 10 are merely examples, and some processing may be omitted or modified according to the configuration or conditions of the information processing device 101 or the information processing device 301.

The captured image illustrated in FIG. 4 is merely an example, and the captured image changes according to a person existing in a capture area of the imaging device 303. The gaze period 335 illustrated in FIGs. 5 and 6 is merely an example, and the gaze period 335 changes according to the video 334.

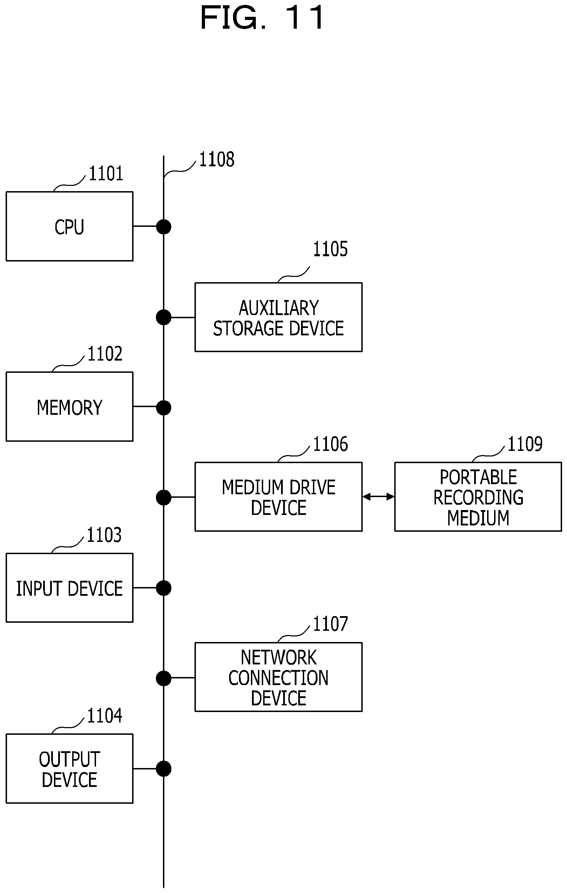

FIG. 11 illustrates a hardware configuration example of the information processing device 101 of FIG. 1 and the information processing device 301 of FIG. 3. The information processing device of FIG. 11 includes a central processing unit (CPU) 1101, a memory 1102, an input device 1103, an output device 1104, an auxiliary storage device 1105, a medium drive device 1106, and a network connection device 1107. Those configuration elements are hardware, and are coupled to each other by a bus 1108. The biometric sensor 302 and the imaging device 303 of FIG. 3 may be connected to the bus 1108.

The memory 1102 is, for example, a semiconductor memory such as a read only memory (ROM), a random access memory (RAM), or a flash memory, and stores programs and data used for processing. The memory 1102 can be used as the storage unit 311 of FIG. 3.

The CPU 1101 (processor) operates as the acceptance unit 111, the specifying unit 112, the selection unit 113, and the authentication unit 114 of FIG. 1 by executing a program using, for example, the memory 1102. The CPU 1101 also operates as the biometric information acquisition unit 312, the video acquisition unit 313, the face detection unit 314, the gaze direction detection unit 315, the face specifying unit 316, the face authentication unit 317, the biometric information selection unit 318, and the biometric authentication unit 319 of FIG. 3 by executing the program.

For example, the input device 1103 is a keyboard, a pointing device, or the like and is used for inputting an instruction or information from an operator or a user. The output device 1104 is, for example, a display device, a printer, a speaker, or the like and is used for inquiring to an operator or a user or outputting a processing result. The output device 1104 can be used as the output unit 320 of FIG. 3. A processing result may be the authentication result 338.

The auxiliary storage device 1105 is, for example, a magnetic disk device, an optical disk device, a magneto-optical disk device, a tape device, or the like. The auxiliary storage device 1105 may be a flash memory or a hard disk drive. The information processing device may store programs and data in the auxiliary storage device 1105 and load these programs and data into the memory 1102 to use. The auxiliary storage device 1105 can be used as the storage unit 311 of FIG. 3.

The medium drive device 1106 drives a portable recording medium 1109 and accesses recorded content of the portable recording medium 1109. The portable recording medium 1109 is a memory device, a flexible disk, an optical disk, a magneto-optical disk, or the like. The portable recording medium 1109 may be a compact disk read only memory (CD-ROM), a digital versatile disk (DVD), a universal serial bus (USB) memory, or the like. The operator or the user can store programs and data in the portable recording medium 1109 and load these programs and data into the memory 1102 to use.

As described above, a computer-readable recording medium in which the programs and data to be used for processing are stored is a physical (non-transitory) recording medium such as the memory 1102, the auxiliary storage device 1105, or the portable recording medium 1109.

The network connection device 1107 is a communication interface circuit that is connected to a communication network such as a local area network (LAN) or a wide area network (WAN), and performs data conversion associated with communication. The information processing device can receive programs and data from an external device via the network connection device 1107 and load these programs and data into the memory 1102 to use. The network connection device 1107 can be used as the output unit 320 of FIG. 3.

The network connection device 1107 may receive the biometric information to be authenticated 333 and the video 334 from the biometric sensor 302 and the imaging device 303 of FIG. 3 via the communication network, respectively.

Note that the information processing device does not need to include all the configuration elements of FIG. 11, and some configuration elements may be omitted according to the use or the condition. For example, in a case where the information processing device does not use the portable recording medium 1109 or the communication network, the medium drive device 1106 or the network connection device 1107 may be omitted.

While the disclosed embodiment and the advantages thereof have been described in detail, those skilled in the art will be able to make various modifications, additions, and omissions without departing from the scope of the embodiment as explicitly set forth in the claims.

### CITATION LIST

### NON-PATENT DOCUMENT

Non-Patent Document 1: "Fujitsu Develops Non-Contact Biometric Integration Technology as an Optimal Solution for a Cashless Society", [online], Fujitsu Laboratories Ltd., Press Release, October 4, 2018, [searched on December 16, 2019], Internet <URL: https://pr.fujitsu.com/jp/news/2018/10/4.html>
Non-Patent Document 2: S.V. Sheela et al., "Iris Detection for Gaze Tracking Using Video Frames", pp. 629-633, 2015 IEEE International Advance Computing Conference (IACC)
Non-Patent Document 3: En Teng Wong et al., "Gaze Estimation Using Residual Neural Network", pp. 411-414, 2019 IEEE International Conference on Pervasive Computing and Communications Workshops (PerCom Workshops)
Non-Patent Document 4: Haoping Deng et al., "Monocular Free-head 3D Gaze Tracking with Deep Learning and Geometry Constraints", pp. 3162-3171, 2017 IEEE International Conference on Computer Vision (ICCV)

## Claims

1. An authentication method implemented by a computer, the authentication method comprising:
accepting biometric information to be authenticated detected by a biometric sensor;
specifying, on a basis of an orientation of a line of sight or an orientation of a face of one or more persons that appear in a captured image captured by an imaging device at a time of detecting the biometric information to be authenticated, a face image of any one of the persons included in the captured image;
selecting registered biometric information associated with registered face image information similar to the specified face image from among pieces of registered biometric information respectively associated with a plurality of pieces of registered face image information; and
authenticating the biometric information to be authenticated on a basis of a comparison result of comparing the biometric information to be authenticated with the selected registered biometric information.

2. The authentication method according to claim 1, wherein the processing of specifying a face image of any one of the persons includes specifying the face image of the any one of the persons on the basis of an orientation of a line of sight or an orientation of a face of each of a plurality of persons included in the captured image from among the face images of the plurality of persons.

3. The authentication method according to claim 1 or 2, wherein the captured image is an image captured during a specific period before the biometric information to be authenticated is accepted.

4. The authentication method according to claim 3, wherein the processing of specifying a face image of any one of the persons includes processing of obtaining the orientation of the line of sight or the orientation of the face of the any one of the persons from each of a plurality of images captured during the specific period, and includes specifying the face image of the any one of the persons on a basis of a fact that the orientation of the line of sight or the orientation of the face obtained from each of the plurality of images faces a position of the biometric sensor.

5. The authentication method according to claim 4, for causing the computer to further execute processing of determining the position of the biometric sensor on the basis of the orientation of the line of sight or the orientation of the face of a that appears in an image captured before the specific period.

6. The authentication method according to any one of claims 1 to 5,
wherein the biometric sensor is a vein sensor or a fingerprint sensor.

7. An information processing apparatus comprising:
a memory; and
a processor coupled to the memory, the processor being configured to perform processing, the processing including:
accepting biometric information to be authenticated detected by a biometric sensor;
specifying, on a basis of an orientation of a line of sight or an orientation of a face of one or more persons that appear in a captured image captured by an imaging device at a time of detecting the biometric information to be authenticated, a face image of any one of the persons included in the captured image;
selecting registered biometric information associated with registered face image information similar to the specified face image from among pieces of registered biometric information respectively associated with a plurality of pieces of registered face image information; and
authenticating the biometric information to be authenticated on a basis of a comparison result of comparing the biometric information to be authenticated with the selected registered biometric information.

8. The information processing apparatus according to claim 7, wherein the specifying of the face image includes specifying the face image of the any one of the persons on the basis of an orientation of a line of sight or an orientation of a face of each of a plurality of persons included in the captured image from among the face images of the plurality of persons.

9. The information processing apparatus according to claim 7 or 8,
wherein the captured image is an image captured during a specific period before the biometric information to be authenticated is accepted.

10. An authentication program comprising instructions which, when executed by a computer, cause the computer to execute processing comprising:
accepting biometric information to be authenticated detected by a biometric sensor;
specifying, on a basis of an orientation of a line of sight or an orientation of a face of one or more persons that appear in a captured image captured by an imaging device at a time of detecting the biometric information to be authenticated, a face image of any one of the persons included in the captured image;
selecting registered biometric information associated with registered face image information similar to the specified face image from among pieces of registered biometric information respectively associated with a plurality of pieces of registered face image information; and
authenticating the biometric information to be authenticated on a basis of a comparison result of comparing the biometric information to be authenticated with the selected registered biometric information.

11. The authentication program according to claim 10, wherein the specifying of the face image includes specifying the face image of the any one of the persons on the basis of an orientation of a line of sight or an orientation of a face of each of a plurality of persons included in the captured image from among the face images of the plurality of persons.

12. The authentication program according to claim 10 or 11, wherein the captured image is an image captured during a specific period before the biometric information to be authenticated is accepted.
